(19) Europäisches Patentamt / European Patent Office / Office européen des brevets

(11) **EP 1 795 452 B1**

(12) **EUROPEAN PATENT SPECIFICATION**

(45) Date of publication and mention
of the grant of the patent:
**10.02.2010 Bulletin 2010/06**

(51) Int Cl.:
**B65D 23/08** *(2006.01)*   **B29C 45/14** *(2006.01)*

(21) Application number: **05257600.6**

(22) Date of filing: **12.12.2005**

(54) **In-mold labeled injection moulded article for packaging products containing high levels of organic solvents and method of manufacturing the same**

Folienhinterspritzter Spritzgiessartikel für Verpackungen von Produkten, die hohe Anteile an organischen Lösungsmitteln enthalten, und Verfahren zur Herstellung desselben

Article avec une étiquette surmoulée par injection pour des paquets de produits comprenant des taux élevés de solvants organiques et son procédé

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.06.2007 Bulletin 2007/24**

(73) Proprietor: **Borealis Technology Oy**
**06101 Porvoo (FI)**

(72) Inventor: **Augestad, Morten**
**3942 Porsgrunn (NO)**

(74) Representative: **Campbell, Neil Boyd**
**Frank B. Dehn & Co.**
**St Bride's House**
**10 Salisbury Square**
**London**
**EC4Y 8JD (GB)**

(56) References cited:
EP-A- 0 309 138   GB-A- 1 407 259
GB-A- 2 226 976   US-A- 4 982 872
US-B1- 6 342 564   US-B1- 6 682 795
US-B1- 6 723 829

• PATENT ABSTRACTS OF JAPAN vol. 1998, no. 10, 31 August 1998 (1998-08-31) -& JP 10 129737 A (KUREHA CHEM IND CO LTD), 19 May 1998 (1998-05-19)
• PATENT ABSTRACTS OF JAPAN vol. 014, no. 155 (M-0954), 26 March 1990 (1990-03-26) -& JP 02 016019 A (SATO SHIYOUSAN:KK), 19 January 1990 (1990-01-19)
• PATENT ABSTRACTS OF JAPAN vol. 1995, no. 02, 31 March 1995 (1995-03-31) & JP 06 320689 A (TOPPAN PRINTING CO LTD), 22 November 1994 (1994-11-22)
• SAECHTLING, H.J. ET.AL.: "Kunststofftaschenbuch, 26. Ausgabe" 1995, CARL HANSER VERLAG , MÜNCHEN, WIEN , XP002380667 * pages 606,607 * * pages 694,695 * * pages 696,697 * * pages 808,809 *

**EP 1 795 452 B1**

**Description**

This invention relates to injection moulded articles, in particular to injection moulded polypropylene articles, e.g. heterophasic block copolymer articles, suitable for packaging solvent based products or aqueous based products containing high levels of organic solvent as well as to processes for the manufacture thereof.

Many aqueous based products such as water-based household paint are typically packaged in polypropylene based containers. Such containers are relatively cheap and simple to make, are light and easy to transport and are strong and potentially recyclable.

Such containers are however, unsuitable for packaging solvent based products and products that cure in the presence of oxygen because polypropylene shows insufficient resistance to solvents and allows oxygen to migrate into the container from the external air. Such containers also fail to sufficiently prevent the egress of solvent, thus allowing the product to deteriorate during storage. Solvent based products such as certain inks, leather tanning products, agricultural pesticides, paints and all kinds of oils (e.g. fuels) etc are therefore conventionally packaged in metal or glass containers.

Metal containers are expensive and heavy and glass containers breakable so there remains a need to produce polypropylene containers, for packaging solvent based materials such as paints and for packaging materials which cure in the presence of oxygen, which are resistant to solvents and prevent oxygen migration. Such containers must additionally be strong and cheap to manufacture and transport.

The inventors have surprisingly found that a container formed from polypropylene can be used successfully in these applications if the container is provided with an internal in mould label. The combination of an internal in mould label and a polypropylene container has been found to possess the necessary solvent resistance and barrier properties (i.e. the prevention of oxygen migration). A polypropylene injection moulded article can be formed which may replace the metal or glass containers conventionally employed in the field. Such polypropylene containers have the additional advantage of being light in comparison to glass or metal containers and are therefore easier to transport and lighter for the end user to carry.

The use of in mould labels with polypropylene containers is not itself new. Such labels are used routinely on the outside of polypropylene containers for all manner of products as labels, i.e. for aesthetic reasons. The use of an in mould label internally is not however considered in labelling for obvious reasons - the would not be visible.

The use therefore of an internal in mould label with polypropylene containers is not well known. GB 2226976 concerns injection moulding of a container around a flexible metallic/plastic barrier liner in view of the susceptibility of polypropylene containers to chemical attack by solvents. JP 02016019 relates to moulding of a synthetic resin vessel having barrier properties. US 6682795 concerns multi-layer containers comprising a liquid-crystal polymer barrier layer. In JP 10-129737, the possibility of using an in mould label on the inside of a food container is discussed to improve the oxygen gas barrier properties of the container. The container can comprise an LDPE or polypropylene copolymer component. However, the use of internal in mould labels in food applications has not been commercialised since there is often a small gap in the label in the corner of a container or where the base and sides of a container meet. This small gap allows oxygen to penetrate the container in that area causing degradation of the product near the gap. In food applications, such degradation of a small amount of product means the whole product is contaminated and has to be thrown away.

The present inventors have realised that this is not a problem with solvent based materials such as paint or with non-edible materials were minor degradation of a part of the product occurs. When, for example, a paint is mixed prior to application to a surface, any tiny amount of degradation of the product is irrelevant as it is diluted throughout the remainder of the undamaged product. Surprisingly, therefore, the use of in mould label technology in non-food applications is still of great benefit.

Moreover, the present inventors have realised that the use of an internal in mould label prevents the loss of organic solvents from within the container. As noted above, polypropylene containers have previously not been used to carry solvent containing materials in view of their permeability to the solvents. The use of an internal in mould label has been surprisingly found to significantly prevent solvent losses and achieves this much more successfully than an external in mould label.

Thus, viewed from the invention provides an injection moulded article according to claim 1 formed from a polypropylene polymer and having an in mould label located inside said article, said article containing a product comprising an organic solvent.

The invention also provides a process for the preparation of an injection moulded article, said process comprising:

(I) placing a non metallised in mould label on the male side of an injection mould wherein said in mould label comprises at least one polymeric material selected from the group of polyethylene terephthalate, polyvinyl chloride, polyethylene naphthalate, polyamide, polyvinyl alcohol, ethylene vinyl alcohol propylene vinyl alcohol, polyvinylidene,

chloride and acrylic polymers;

(II) injecting a polypropylene polymer into said injection mould to form said article, said polymer preferably having an $MFR_2$ of greater than 10 g/10min;

(III) removing said article from the mould; and

(IV) adding paint containing an organic solvent to said article.

The present invention is also directed to the use of an injection moulded article for containing a paint comprising an organic solvent as claimed in claim 15.

The polypropylene used to form the injection moulded article of the invention may be a homopolymer or copolymer but is preferably a copolymer. The copolymer may be a random copolymer or block copolymer. Preferably the copolymer is heterophasic. Most preferably the polypropylene is a heterophasic block copolymer.

Propylene polymers of use in this invention may comprise:

(A) from 70 to 98 parts by weight of a crystalline propylene homopolymer, or a crystalline random copolymer of propylene with ethylene and/or C4-C 10 $\alpha$-olefins, containing from 0.5 to 10% by weight of ethylene and/or $\alpha$-olefins and

(B) from 2 to 30 parts by weight of an elastomeric copolymer of propylene with ethylene or one or more C4-C10 $\alpha$-olefins that is partially soluble in xylene.

The fraction soluble in xylene at 25°C contains from 25 to 60% (preferably 30 to 50%) by weight of ethylene and has an intrinsic viscosity value ranging from 1,5 to 4.5 (preferably 1,8 to 3.5) dl/g.

The polypropylene polymer composition preferably has a Melt Flow Rate ($MFR_2$) value (measured at 230 °C, with 2.16 kg load) of from 2.5 to 100 g/10min, preferably 2,5 to 60 g/10 min, e.g. at least 4 g/10min, preferably greater than 10 g/10min, e.g. at least 11 g/10min, especially at least 13 g/10min. Polypropylenes having higher $NMR_2$ values are of benefit because they give better flow yielding shorter cycle times and higher output.

Polypropylene copolymers may comprise comonomer(s) selected from ethylene or a C4-20-alpha-olefin comonomer such as 1-butene, 1-hexene or 1-octene. The most preferred comonomer is ethylene. A mixture of comonomers may also be used, e.g. forming a terpolymer. The term "copolymer" used herein is intended to cover binary copolymers as well as ternary polymers etc. Binary copolymers are preferred.

Where the polypropylene polymer is heterophasic, the polymer may comprise a semi-crystalline matrix component (A) and an amorphous component (B). Both these components may be formed from propylene and ethylene copolymers, the ethylene content in the amorphous component being higher than that of the matrix component.

For a heterophasic block copolymers, the matrix component may contain 1 to 10% of comonomer with the amorphous component containing 10 to 20 wt% comonomer. The matrix component typically forms at least 70 wt% of the block copolymer.

The polypropylene should preferably possess a high stiffness and impact strength. The tensile modulus of the polymer should therefore be at least 1000 MPa, preferably at least 1200 MPa. The presence of the organic solvent containing product in the article tends to reduce the stiffness of the article so it is important that a high stiffness material is employed in its formation. Charpy impact strengths may be at least 6 kJ/m$^2$ (23°C) or at least 3 kJ/m$^2$ (-20°C).

Polypropylene polymers can be made using Ziegler-Natta or single site catalysis, e.g. metallocene catalysts using well known conventional techniques. Numerous patent applications teach the use of these catalysts in the manufacture of polypropylene polymers. The production of the polypropylenes of use in the invention preferably takes place in a two stage polymerisation were a heterophasic material can be made. The use of Ziegler-Natta catalysis is preferred.

The xylene soluble fraction of the polymer may be in the range 2 to 30, especially 10 to 25 g/10min.

Many polypropylenes are commercially available from suppliers such as Borealis, Dow, Exxon, Basell and Solvay and polypropylenes made and sold by these companies are suitable for use in this invention.

The articles of the invention should comprise at least 50wt% polypropylene, e.g. at least 75 wt% polypropylene, e.g. at least 80 wt% polypropylene, e.g. consist essentially of polypropylene (i.e. the article contains polypropylene and standard polymer additives only). Additives such as pigments, nucleating agents, antistatic agents, fillers, UV stabilisers, antioxidants, etc., generally in amounts up to 1 wt% can be added.

In a preferred embodiment, the articles of the invention contain talc, e.g. as a nucleating agent. The amount of talc present may range from 0.01 to 10 wt%.

The articles of the invention may contain minor, e.g. up to 20% by weight, preferably up to 10% by weight of other polymer components, e.g. other polyolefins in particular polyethylenes such as low density polyethylene (LPDE), linear low density polyethylene (LLPDE), high density polyethylene (HDPE), plastomers or ethylene propylene rubber (EPR). The article may also be formed from a mixture of polypropylene components, e.g. a mixture of polypropylene components as defined above.

The article of the invention also comprises at least one in mould label. Such a label is a film which possesses low levels of oxygen permeability. The in mould label is positioned on the inside surface of the article. In this application, in mould labelling involves a process in which precut labels are placed on the male side of a mould before the polymer is introduced into the mould. During the moulding process, the label and polymer melts adhere.

It is preferred if a single in mould label is employed on the inside of he article of the invention although it would be possible to use a number of labels (e.g. two labels covering different portions of the inside of the injection moulded container). It is also possible for there to be an external in mould label or labels, e.g. for conventional labelling purposes.

The in mould label of use in this invention should possess low levels of oxygen permeability. For example at 23°C/75% Relative humidity and an 80 $\mu$m film, the oxygen transmission should be less than 100 cc/m$^2$/day, preferably less than 20 cc/m$^2$/day, more preferably less than 10 cc/m$^2$/day. Thus, oxygen transmission is ideally less than 1 cc/m$^2$/day per micron of film thickness, preferably less than 0.5 cc/m$^2$/day per micron of film thickness.

Polymers of use in the in-mould labels of the invention include polyethylene terephthalate (PET), polyvinyl chloride (PVC), polyethylene naphthalate (PEN), polyamide (PA), polyvinyl alcohol (PVAL), ethylene vinyl alcohol (EVOH), propylene vinyl alcohol (PVOH) polyvinylidene chloride (PVDC), acrylic polymers or mixtures thereof. EVOH is a particularly preferred component of in mould labels. These polymers can be combined with other polymers such as polypropylene (PP) and polyethylene (PE) to form labels.

Blends which have been developed and shown to form effective oxygen barriers include EVOH with PP, EVOH with PE, EVOH with PA, PA with PP and PA with PET. PVDC and acrylic polymers are especially suitable as external layers within the in mould label.

Some of the in mould label polymers, e.g. PA, EVOH and PVAL, are more effective when dry and hence when employed in the in mould label may need to be combined with a water barrier layer. For example, PP is an excellent water vapour barrier and may conveniently be employed along with PA or EVOH to form a film which exhibits both oxygen and water vapour barrier properties. Where PP is employed in the in mould label, it is preferred if this is biaxially orientated.

Other potential films include thin glass-like films formed by coating polymers such as PET, PA or PP with SiO$_x$. Such silica coatings can be introduced via physical vapour deposition and are commercialised by Alcan packaging, 4P Ronsberg and Mitsubishi.

Other new barrier technologies may be applicable in the invention claimed, e.g. those commercialised by Ticona (Vectran), Proctor & Gamble (Nodax), Dow (BLOX), Superex Inc. (PET or PA with liquid crystalline polymer) and nanocomposite technology. Such labels provide very effective oxygen and solvent barrier properties.

Preferably however, the in mould label is formed from a multilayer polymeric structure or laminate, e.g. formed from coextrusion by conventional techniques. Such multilayer in mould labels should preferably comprise 2 to 7 layers, e.g. 3 to 5 or 5 to 7 layers. Especially preferred in mould labels are formed from PE-EVOH-PE, PP-EVOH-PP or PP-PVOH-PP optionally comprising one or more adhesive layers. In general, the in mould label should comprise a PVOH or EVOH layer.

The in mould label should preferably be 1 to 200 $\mu$m in thickness, e.g. 5 to 120 $\mu$m, especially 30 to 100 $\mu$m.

The in mould labels of use in this invention can be purchased from Companies such as Vogt, P'Auer, Pachem, Autotype etc.

In mould label technology is well known and conventional techniques may be used to implement its use in the invention, e.g. as described US 4837075.

The article of the invention, which is preferably a container, may be manufactured by placing the in mould label on the male side of the injection mould, adding the plastic to the mould and carrying out the moulding process. For the injection moulding conventional moulding equipment may be used, e.g. operating at an injection temperature of 190 to 275°C and typical pressures, e.g. 500 to 900 bar. Typically containers produced in this fashion will have a volume of 100 mL to 100 L and lids will typically have maximum dimensions of 10 to 600 mm. Container sizes are preferably greater than 100 ml, such as greater than 500 ml, preferably greater than 1 L, especially greater than 10 L.

The in mould label (or labels) should cover at least 50%, e.g. at least 70%, preferably at least 90% of the inside surface of the container, e.g. the side or sides of the container and preferably its base. In a most preferred embodiment the label should cover at least 95% e.g. the entire internal surface of the injection moulded article.

The person skilled in the art will appreciate that closures or lids are formed separately and may not comprise the in mould label. It is however, preferable if the closure means or lid also comprises an in mould label, preferably the same label as used on the container. This label may be external or internal on the closure means, preferably internal.

The injection moulded article of the invention may have one or more of the following preferred features:

Tensile modulus (E-modulus) of at least 800, preferably at least 1000, especially at least 1200 MPa (measured according to ISO 527-2);
Charpy Impact (23°C) of at least 3 kJ/m$^2$, preferably at least 5 kJ/m$^2$, more preferably at least 7 kJ/m$^2$.

Oxygen transmission of less than 0.2 ml/package 24h, preferably no more than 0.1 ml/package 24h, more preferably no more than 0.06 ml/package 24h, especially no more than 0.025 ml/package 24h as measured by the AOIR method of Larsen *et al.* (2000).

The articles of the invention have surprisingly found to swell less than articles in which the label is positioned on the outside of the article. The presence of an internal in mould label also gives rise to higher stiffness values and improved stress cracking values in comparison to an externally labelled article.

The article of the invention is used to carry products containing organic solvents. Typical organic solvents include alcohols (such as methanol, ethanol, white spirit and butanol), diols (such as ethylene glycol and propylene glycol), ketones (such as acetone or methylethylketone), aliphatic hydrocarbons (such as hexane), aromatics (such as xylene, benzene and toluene or substituted analogues thereof such as nitrobenzene and chlorobenzene), halogenated solvents (such as chloroform, dichloromethane, carbon tetrachloride and 1,1,1-trichloroethane), sulphur containing solvents (such as DMSO), amines (such as ethylamine), amides (such dimethyl formamide), heterocyclic solvents (such as THF, pyridine, piperidine, N-methylpyrollidone), isocyanates and esters (e.g. acetates such as ethyl acetate, methyl acetate).

Most commonly, the material being package will contain alcohols such as white spirit or an aromatic compound such as xylene.

In a preferred embodiment, the material in the injection moulded article will be a solvent based material, i.e. one which the primary component is an organic solvent.

However, due to environmental concerns, the use of solvent based products is being slowly phased out, in particular in materials which are for use inside. The products which are replacing these solvent based products tend to be aqueous based, e.g. are emulsions, but they still contain significant levels of organic solvents, e.g. to dissolve non-water soluble active components. Any product which contains at least 5 wt%, preferably at least 10 wt%, more preferably at least 25%, especially at least 50% of organic solvent may be packaged according to the invention.

Products which can be packaged using the articles of the invention therefore include paints, leather tanning goods, inks, soaps, adhesives, silicones, oils (e.g. fuels), sealants, industrial and laboratory chemicals. Preferably the injected moulded article is for solvent based paint, more preferably for solvent based alkyd paint.

In this regard, paints often contain binding agents such as alkyd oils. These compounds may be cured by oxygen migration through the article wall. It has been surprisingly found that the in mould label employed in this invention also reduces or prevents curing of the binding agent containing paints. More generally, many products contain compounds which cure in the presence of oxygen, e.g. hardening agents (materials which are designed to harden on contact with air, e.g. to allow the material to dry quickly). The use of the injected moulded articles of the invention prevents oxygen entering the article and therefore prevents curing occurring.

Thus, viewed from another aspect the invention provides an article containing paint, preferably an oxygen curing binder containing paint, formed from a polypropylene polymer and having an internal in mould label.

More generally, the invention provides an article containing a hardening agent formed from a polypropylene polymer and having an internal in mould label.

The articles made from polypropylene with internal in mould label prevent emission of the organic solvents from within the container, i.e. possess low volatile organic compound emissions (VOC's). This forms a further aspect of the invention. Thus, emissions may be less than 0.5 g solvent/day per litre of product, preferably less than 0.25 g solvent./day per litre of product (e.g. for one litre of organic solvent containing paint stored in an injection moulded article of the invention with internal in mould label, less than 0.5 g of solvent would be emitted per day).

The invention will now be described further by reference to the following non-limiting Examples:

**General**

In the Examples which follow and in the description above, the following tests are employed to measure parameters.

**MFR2**

$MFR_2$ is determined at 230°C using 2.16 kg load according to ISO 1133.

**Density**

**Density is determined using ISO 1183**

**Tensile properties**

Tensile properties were measured on injection moulded samples according to ISO 527-2: 1993. Tensile modulus (E-modulus) was measured at a speed of 1mm/min

**Charpy impact**

This method was applied on injection moulded notched samples according to ISO 179/1eA. The samples are tested at 23°C and at -20°C.

**Oxygen transmission (AIORMethod)**

Oxygen transmission rate values were measured by the ambient oxygen ingress rate (AOIR) method as described in the paper by Larsen *et al.* (2000).

Larsen, H., Kohier, A. and Magnus, E. M. 2000. Ambient Oxygen Ingress Rate method - an alternative method to Ox-Tran for measuring oxygen transmission rate of whole packages. Packag. Technol. Sci. 13(6):233-241.

**Xylene Soluble Fraction**

The xylene soluble fraction (XS) as defined and described in the present invention is determined as follows: 2.0 g of polymer are dissolved in 250 mm p-xylene at 135°C under agitation. After $30 \pm$ minutes, the solution was allowed to cool for 15 minutes at ambient temperature and then allowed to settle for 30 minutes at $25 \pm 0.5$°C. The solution was filtered with filter paper into two 100 mm flask. The solution from the first 100 mm vessel was evaporated in nitrogen flow and the residue dried under vacuum at 90°C until constant weight is reached. Xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of analyzed sample (milliliter).

The solution from the second 100 ml flask was treated with 200 ml of acetone under vigorous stirring. The precipitate was filtered and dried in a vacuum oven at 90°C. This solution can be employed in order to determine the amorphous part of the polymer (AM) using the following equation:

$$AM\% = (100 \times m_1 \times v_0)/(m_0 \times v_1)$$

wherein $m_0$ designates the initial polymer amount (grams), $m_1$ defines the weight of residue (grams), $v_0$ defines the initial volume (milliliter) and v, defines the volume of analyzed sample (milliliter).

**Intrinsic Viscosity**

Intrinsic viscosity is measured in accordance with ISO 1628.

**Comonomer content**

Comonomer content (weight percent) is determined in a known manner based on FTIR, calibrated with C13NMR

**Example 1**

The following polypropylene polymer was employed:

**Table 1**

|  | Polymer properties* |
| --- | --- |
| $MFR_2$ | 13 g/10min |
| Density | 905 kg/m$^3$ |
| Tensile modulus [MPa] | 1400 |
| Charpy impact [kJ/m$^2$] 23°C/-20°C | 8.0/4.0 |
| Tensile Strain at yield | 6% |
| Tensile Stress at yield | 26 MPa |
| *(where appropriate measured on injected moulded specimens according to ISO 1873-2(97)) | |

## Example 2

In Mould Label

The following in mould label was employed.

80 μm PP-EVOH-PP barrier film (Trade name G.S.V.6) obtainable from Vogt with the properties in Table 2:

Table 2

|  | Test Method | Unit | Value | |
| --- | --- | --- | --- | --- |
| Haze | ASTM D 1003 |  | 6 | |
| Gloss | ASTM D2457 |  | 80 | |
| COF | ASTM D 1894 |  | 0.15-0.30 | |
| Impact Strength | ASTM D1709 |  | 80.5 | |
|  |  |  | MD | TD |
| Tensile at yield | ASTM D882 | N/mm$^2$ | 21 | 21 |
| Tensile at break | ASTM D882 | N/mm$^2$ | 30 | 24 |
| Elong at break | ASTM D882 | (%) | 680 | 642 |
| Tear str | ASTM D1938 8 |  | 11.0 | 10.2 |
| $O_2$ Transmission | ASTM D3985 23°C/75%RH | cc/m$^2$/day | 5 | |
| WVTR | ASTM F1249 38°C/90%RH | g.m$^2$/day | 4 | |
| (MD=machine direction, TD transverse direction, WVTR is water vapour transmission, COF is coefficient of friction) | | | | |

## Example 3

Injection Moulded Container

The polypropylene was injection moulded using the following procedure to give a container.

Injection moulding took place in a 120 t Nestal Syngergy injection moulding machine employing the conditions below. The formed container was rectangular with a capacity of 0.65 L and wall thickness of 1.2 mm. The lid was produced in the same machine using a separate mould. Containers and lids were made using the polymer set out in Table 1. Container Injection Moulding conditions:

Temperature: 250°C
Holding Pressure: 500 bar
Holding Time: 3 secs
Cooling time: 5 secs

Lid Injection Moulding conditions:
Temperature: 250°C
Holding Pressure: 500 bar
Holding Time: 2 secs
Cooling time: 4 secs

An In Mould label was placed manually on the male (internal label) or female (external label) side of the mould for the lid/container prior to plastic injection. The label employed for both container and lid was the butterfly label available from Vogt with barrier properties of $O_2$TR 5cc/m2/day described above. A control container without in mould label was also formed under identical conditions.

The label covered 95% of the inner/outer surface of the packaging exposed to the container content.

## Example 4

Solvent Loss

Containers were filled with 0.65L of Penguard Primer (which contains the following volatile compounds: 10-25 wt% xylene, 2.5 to 10 wt% butan-1-ol, 2.5 to 10 wt% naphtha, 2.5 to 10 wt% ethylbenzene, 2.5 to 10 wt% 1-methoxy-2-propanol) and sealed using a lid. The weight of the container before and then after 21 days at 40°C was taken. The containers were then held at 23°C for 28 days and the weight again taken. Results are presented in Table 3

Table 3

| Label | No label | Label outside | Label inside |
|---|---|---|---|
| Storage 40°C: Initial weight (g) | 617.3 | 608.3 | 636.5 |
| After 21 days at 40°C (g) | 567.3 | 588.1 | 632.9 |
| Difference (g) | 50.0 | 20.2 | 3.6 |
| | | | |
| After 21 days at 40°C followed by 28 days at 23°C | 552.5 | 581.9 | 629.4 |
| Difference (over 28 days at 23°C) (g) | 14.8 | 6.2 | 3.5 |
| | | | |
| Total wt loss over 49 days (g) | 64.8 | 26.4 | 7.1 |
| Total wt loss over 49 days % (g) | 10.5 | 4.3 | 1.1 |

Thus, VOC losses over 49 days were 90% less than a container with no label and 75 % better than a container with external label.

## Example 4

**Oxygen Transmission**

Oxygen transmission rate values were measured by the ambient oxygen ingress rate (AOIR) method as described in the paper by Larsen *et al.* (2000). AOIR is a method to measure oxygen transmission rate for the whole packaging. The packages were mounted to a combined flushing and sampling port prior to flushing with nitrogen. The first (initial) $O_2$-concentration in the packages was measured after 1 day of storage at 23 °C and 50% RH. The second (final) $O_2$-concentration in the packages was measured after 4 days of storage at the same storage conditions. The $O_2$-concentration was measured by the use of a specially designed syringe for gas sampling, and the gas sample was injected into a Mocon/Toray oxygen analyser LC-700F (Modem Controls Inc, Minnesota, USA) with a zirconium oxide cell. Additionally, the volume of the packages was registered. The oxygen transmission rate of the packages, given as ml $O_2$/package/day, was finally calculated according to the equations given by Larsen *et al.* (2000).

The containers of Example 3 with no label and with internal in mould label were used. The AOIR for the two sets of containers was measured under the conditions below and the results are shown in the table below.

Conditions: 23°C. Outside the container 50% relative humidity, inside nitrogen.

| Label | No label | Internal in mould label |
|---|---|---|
| Oxygen Transmission rate [ml/pkg 24hr] | 0.52 ±0.00 | 0.06 ±0.00 |

A reduction of oxygen transmission of 90% was observed by the inclusion of an in mould label.

Larsen, H., Kohier, A. and Magnus, E. M. 2000. Ambient Oxygen Ingress Rate method - an alternative method to Ox-Tran for measuring oxygen transmission rate of whole packages. Packag. Technol. Sci. 13(6):233-241.

**Claims**

1.   An injection moulded article formed from a polypropylene polymer and having a in mould label located on the inside surface of said article, said article containing paint comprising an organic solvent, **characterized in that** said in mould label is non-metallised and comprises at least one polymeric material selected from the group of polyethylene terephthalate, polyvinyl chloride, polyethylene naphthalkte, polyamide, polyvinyl alcohol, ethylene vinyl alcohol, propylene vinyl alcohol, polyvinylidene chloride and acrylic polymers.

2.   An injection moulded article as claimed in claim 1 wherein said solvent is xylene or white spirit.

3.   An article as claimed in any one of claims 1 to 2 wherein the polypropylene has an MFR2 of greater than 10 g/l 10min.

4.   An article as claimed in any one of claims 1 to 3 wherein the polypropylene is a copolymer.

5.   An article as claimed in any one of claims 1 to 4 wherein the polypropylene is a heterophasic block copolymer.

6.   An article as claimed in any one of claims 1 to 5 which comprises at least 70 wt% of the polypropylene.

7.   The article as claimed in any one of claims 1 to 6 having an oxygen transmission of less than 0.2 ml/ package 24h.

8.   The article as claimed in any of claims 1 to 7 wherein said in mould label has an oxygen transmission of less than 100 cc/m$^2$/day at 23°C and 75% relative humidity.

9.   The article as claimed in any of claims 1 to 8 wherein said in mould label is a multi layered laminate.

10.   The article as claimed in claim any one of claims 1 to 9 wherein the in mould label comprises EVOH.

11.   The article as claimed in any of claims 1 to 10 comprising at least one in mould label covering a total of at least 50% of the surface of said article.

12.   The article as claimed in any one of claims 1 to 11 wherein said solvent is an alcohol (such as methanol, ethanol, white spirit and butanol), ketone (such as acetone or methylethylketone), aliphatic hydrocarbon (such as hexane), aromatic (such as xylene, benzene and toluene or substituted analogues thereof such as nitrobenzene and chlorobenzene), halogenated solvent (such as chloroform, dichloromethane, carbon tetrachloride and 1,1,1-trichloroethane), sulphur containing solvent (such as DMSO), amine (such as ethylamine), amide (such dimethyl formamide), heterocyclic solvent (such as THF, pyridine, piperidine, N-methylpyrollidone), isocyanate or ester (e.g. acetates such as ethyl acetate, methyl acetate)

13.   The article of claim 1 to 12 wherein said paint contains an alkyd oil.

14.   A process for the preparation of an injection moulded articles comprising paint containing an organic solvent, said process comprising:

   (I) placing a non metallised in mould label on the male side of an injection mould wherein said in mould label comprises at least one polymeric material selected from the group of polyethylene terephthalate, polyvinyl, chloride, polyethylene naphthalate, polyamide, polyvinyl alcohol, ethylene vinyl alcohols, propylene vinyl alcohol, polyvinylidene, chloride and acrylic polymers;

(II) injecting a polypropylene polymer into said injection mould to form said article, said polymer preferably having an MFR$_2$ of greater than 10 g/10min;
(III) removing said article from the mould; and
(IV) adding paint containing an organic solvent to said article.

15. Use of an injection moulded article formed from a polypropylene polymer and having a non-metallised in mould label located on the inside surface of said article wherein said in mould label comprises at least one polymeric material selected from the group of polyethylene terephthalate, polyvinyl chloride, polyethylene naphthalate, polyamide, polyvinyl alcohol, ethylene vinyl alcohol propylene vinyl alcohol, polyvinylidene chloride and acrylic polymers to contain paint comprising an organic solvent.

**Patentansprüche**

1. Spritzgußgegenstand, der aus einem Polypropylenpolymer hergestellt ist und ein hinterspritztes Etikett aufweist, das sich auf der Innenseite dieses Gegenstandes befindet, wobei der Gegenstand einen Anstrich enthält, der ein organisches Lösungsmittel umfaßt, **dadurch gekennzeichnet, daß** das hinterspritzte Etikett nicht metallisiert ist und zumindest ein Polymermaterial umfaßt, das aus der Gruppe von Polyethylentherephthalat, Polyvinylchlorid, Polyethylennaphthalat, Polyamid, Polyvinylalkohol, Ethylenvinylalkohol, Propylenvinylalkohol, Polyvinylidenchlorid und Acrylpolymeren ausgewählt ist.

2. Spritzgußgegenstand nach Anspruch 1, wobei das Lösungsmittel Xylol oder Lackbenzin ist.

3. Gegenstand nach einem der Ansprüche 1 bis 2, wobei das Polypropylen einen MFR$_2$-Wert von mehr als 10 g/10 min aufweist.

4. Gegenstand nach einem der Ansprüche 1 bis 3, wobei das Polypropylen ein Copolymer ist.

5. Gegenstand nach einem der Ansprüche 1 bis 4, wobei das Polypropylen ein Blockcopolymer mit verschiedenen Phasen ist.

6. Gegenstand nach einem der Ansprüche 1 bis 5, der zumindest 70 Gew.-% des Polypropylens umfaßt.

7. Gegenstand nach einem der Ansprüche 1 bis 6, der eine Sauerstoffdurchlässigkeit von weniger als 0,2 ml/Packung 24 h aufweist.

8. Gegenstand nach einem der Ansprüche 1 bis 7, wobei das hinterspritzte Etikett eine Sauerstoffdurchlässigkeit von weniger als 100 cm$^3$/m$^2$/Tag bei 23°C und 75 % relativer Feuchte aufweist.

9. Gegenstand nach einem der Ansprüche 1 bis 8, wobei das hinterspritzte Etikett ein mehrschichtiges Laminat ist.

10. Gegenstand nach einem der Ansprüche 1 bis 9, wobei das hinterspritzte Etikett EVOH umfaßt.

11. Gegenstand nach einem der Ansprüche 1 bis 10, umfassend zumindest ein hinterspritztes Etikett, das insgesamt mindestens 50 % der Oberfläche des Gegenstandes bedeckt.

12. Gegenstand nach einem der Ansprüche 1 bis 11, wobei das Lösungsmittel ein Alkohol (wie Methanol, Ethanol, Lackbenzin und Butanol), Keton (wie Aceton oder Methylethylketon), aliphatischer Kohlenwasserstoff (wie Hexan), aromatisches (wie Xylol, Benzol und Toluol oder substituierte Analoga davon, wie Nitrobenzol und Chlorbenzol), halogeniertes Lösungsmittel (wie Chloroform, Dichlormethan, Tetrachlorkohlenstoff und 1,1,1-Trichlorethan), schwefelhaltiges Lösungsmittel (wie DMSO), Amin (wie Ethylamin), Amid (wie Dimethylformamid), heterocyclisches Lösungsmittel (wie THF, Pyridin, Piperidin, N-Methylpyrrolidon), Isocyanat oder Ester (z.B. Acetate, wie Ethylacetat, Methylacetat) ist.

13. Gegenstand nach Anspruch 1 bis 12, wobei der Anstrich ein Alkydöl enthält.

14. Verfahren zum Herstellen eines Spritzgußgegenstandes, der einen Anstrich umfaßt, der ein organisches Lösungsmittel enthält, wobei das Verfahren umfaßt:

(I) Anordnen eines nicht metallisierten Etiketts zum Hinterspritzen auf der Positivseite einer Spritzgießform, wobei das Etikett zum Hinterspritzen zumindest ein Polymermaterial umfaßt, das aus der Gruppe von Polyethylentherephthalat, Polyvinylchlorid, Polyethylennaphthalat, Polyamid, Polyvinylalkohol, Ethylenvinylalkohol, Propylenvinylalkohol, Polyvinylidenchlorid und Acrylpolymeren ausgewählt ist;

(II) Einspritzen eines Polypropylenpolymers in die Spritzgießform, so daß der Gegenstand erzeugt wird, wobei das Polymer vorzugsweise einen MFR$_2$-Wert von mehr als 10 g/10 min aufweist;

(III) Entnehmen des Gegenstandes aus der Form; und

(IV) Hinzufügen des Anstrichs, der ein organisches Lösungsmittel enthält, zu diesem Gegenstand.

**15.** Verwendung eines Spritzgußgegenstandes, der aus einem Polypropylenpolymer erzeugt ist und ein nicht metallisiertes hinterspritztes Etikett aufweist, das sich auf der Innenseite des Gegenstandes befindet, wobei das hinterspritzte Etikett zumindest ein Polymermaterial umfaßt, das aus der Gruppe von Polyethylentherephthalat, Polyvinylchlorid, Polyethylennaphthalat, Polyamid, Polyvinylalkohol, Ethylenvinylalkohol, Propylenvinylalkohol, Polyvinylidenchlorid und Acrylpolymeren ausgewählt ist, für die Aufnahme eines Anstrichs, der ein organisches Lösungsmittel umfaßt.

**Revendications**

**1.** Article moulé par injection formé à partir d'un polymère de polypropylène et ayant une étiquette dans l'article moulé localisée sur la surface intérieure dudit article, ledit article contenant une peinture comprenant un solvant organique, **caractérisé en ce que** ladite étiquette dans l'article moulé est non métallisée et comprend au moins un matériau polymère choisi dans le groupe constitué par le poly(téréphtalate d'éthylène), le poly(chlorure de vinyle), le poly(naphtalate d'éthylène), le polyamide, le poly(alcool vinylique), l'éthylène/alcool vinylique, le propylène/alcool vinylique, le poly(chlorure de vinylidène) et les polymères acryliques.

**2.** Article moulé par injection selon la revendication 1, dans lequel ledit solvant est le xylène ou le white spirit.

**3.** Article selon l'une quelconque des revendications 1 et 2, dans lequel le polypropylène a un MFR2 supérieur à 10 g/10 min.

**4.** Article selon l'une quelconque des revendications 1 à 3, dans lequel le polypropylène est un copolymère.

**5.** Article selon l'une quelconque des revendications 1 à 4, dans lequel le polypropylène est un copolymère séquencé hétérophasique.

**6.** Article selon l'une quelconque des revendications 1 à 5, qui comprend au moins 70 % en poids de polypropylène.

**7.** Article selon l'une quelconque des revendications 1 à 6, ayant une transmission d'oxygène inférieure à 0,2 ml/emballage par 24 heures.

**8.** Article selon l'une quelconque des revendications 1 à 7, dans lequel ladite étiquette dans l'article moulé a une transmission d'oxygène inférieure à 100 cm$^3$/m$^2$/jour à 23 °C et sous 75 % d'humidité relative.

**9.** Article selon l'une quelconque des revendications 1 à 8, dans lequel ladite étiquette dans l'article moulé est un stratifié multicouche.

**10.** Article selon l'une quelconque des revendications 1 à 9, dans lequel l'étiquette dans l'article moulé comprend de l'EVOH.

**11.** Article selon l'une quelconque des revendications 1 à 10, comprenant au moins une étiquette dans l'article moulé couvrant un total d'au moins 50 % de la surface dudit article.

**12.** Article selon l'une quelconque des revendications 1 à 11, dans lequel ledit solvant est un alcool (tel que le méthanol, l'éthanol, le white spirit et le butanol), une cétone (telle que l'acétone ou la méthyléthylcétone), un hydrocarbure aliphatique (tel que l'hexane), un aromatique (tel que le xylène, le benzène et le toluène ou leurs analogues substitués tels que le nitrobenzène et le chlorobenzène), un solvant halogéné (tel que le chloroforme, le dichlorométhane, le tétrachlorure de carbone et le 1,1,1-trichloroéthane), un solvant soufré (tel que le DMSO), une amine (telle que l'éthylamine), un amide (tel que le diméthylformamide), un solvant hétérocyclique (tel que le THF, la pyridine, la pipéridine, la N-méthylpyrrolidone), un isocyanate ou un ester (par exemple les acétates tels que l'acétate d'éthyle, l'acétate de méthyle).

**13.** Article selon les revendications 1 à 12, dans lequel ladite peinture contient une huile alkyde.

**14.** Procédé pour préparer un article moulé par injection comprenant une peinture contenant un solvant organique, ledit procédé comprenant :

(I) le placement d'une étiquette non métallisée dans l'article moulé sur le côté mâle d'un moule de moulage par injection, ladite étiquette dans l'article moulé comprenant au moins un matériau polymère choisi dans le groupe constitué par le poly(téréphtalate d'éthylène), le poly(chlorure de vinyle), le poly(naphtalate d'éthylène), le polyamide, le poly(alcool vinylique), l'éthylène/alcool vinylique, le propylène/alcool vinylique, le poly(chlorure de vinylidène) et les polymères acryliques ;
(II) l'injection d'un polymère de polypropylène dans ledit moule de moulage par injection pour former ledit article, ledit polymère ayant de préférence un $MFR_2$ supérieur à 10g/10 min ;
(III) le retrait de l'article hors du moule ; et
(IV) l'addition de peinture contenant un solvant organique audit article.

**15.** Utilisation d'un article moulé par injection, formé à partir d'un polymère de polypropylène et ayant une étiquette dans l'article moulé non métallisée localisée sur la surface intérieure dudit article, dans laquelle ladite étiquette dans l'article moulé comprend au moins un matériau polymère choisi dans le groupe constitué par le poly(téréphtalate d'éthylène), le poly(chlorure de vinyle), le poly(naphtalate d'éthylène), le polyamide, le poly(alcool vinylique), l'éthylène/alcool vinylique, le propylène/alcool vinylique, le poly(chlorure de vinylidène) et les polymères acryliques, pour contenir une peinture comprenant un solvant organique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2226976 A
- JP 02016019 A
- US 6682795 B

- JP 10129737 A
- US 4837075 A

**Non-patent literature cited in the description**

- **LARSEN, H. ; KOHIER, A. ; MAGNUS, E. M.** Ambient Oxygen Ingress Rate method - an alternative method to Ox-Tran for measuring oxygen transmission rate of whole packages. *Packag. Technol. Sci.,* 2000, vol. 13 (6), 233-241